# EUROPEAN PATENT APPLICATION

(11) **EP 1 605 025 A1**
(43) Date of publication of application: **14.12.2005**
(21) Application number: 05012328.0
(22) Date of filing: 08.06.2005
(51) Int. Cl.: C09D 11/00

(54) **Ink stock solution for ink jet recording, method for manufacturing the same and ink for ink jet recording**

(30) Priority: 08.06.2004 JP 2004169522
(71) Applicant: FUJI PHOTO FILM CO., LTD., Minami-Ashigara-shi, Kanagawa 250-0123 (JP)
(72) Inventor: Sakasai, Yutaka, Yoshida-cho Haibara-gun Shizuoka (JP)
(74) Representative: HOFFMANN EITLE

(57) **Abstract**

An ink stock solution for ink jet recording comprising at least: a dispersion medium; coloring material particles containing a resin; and a dispersant, wherein a flowing characteristic of the ink stock solution shows Newtonian fluidity. The ink stock solution is obtained by subjecting the coloring material particles containing the resin to a swelling or a softening treatment during the dispersing process and/or after the dispersing process. Further, by diluting the ink stock solution with a dispersion medium, a viscosity of the ink for ink jet recording at 20°C is made to be within a range of from 0.5 to 5 mPa·s.

## Description

### Background of the Invention

### 1. Field of the Invention

The present invention relates to an ink stock solution for ink jet recording, a method for manufacturing the same, and ink for ink jet recording. More specifically, the invention relates to an ink stock solution for ink jet recording excellent in ejecting stability and particularly suitable for a coloring material concentrate ejecting type electrostatic ink jet recording system, a method for manufacturing the same, and ink for ink jet recording.

### 2. Description of the Related Art

An ink jet recording method of performing printing by jetting ink on a recording medium to thereby form recording dots is attracting public attention as a non-impact recording method capable of direct recording on plain paper and easy colorization, and various printers by the ink jet recording method have been put to practical use. The ink jet recording method is described, e.g., in Takeshi Agui, Real Color Hard Copy, Sangyo Tosho Co. (1993), Makoto Ono, Non-Impact Printing - Gijutsu to Zairyo (Non-Impact Printing - Techniques and Materials - ), CMC Publishing Co., Ltd. (1986), and Takeshi Amari, Ink Jet Printer - Gijutsu to Zairyo (Ink Jet Printer - Techniques and Materials), CMC Publishing Co., Ltd. (1998), and there are the systems of on-demand (optional jetting) and continuous (continuous jetting) systems. Further, as the continuous system, a recording system called an electrostatic type (a Sweet type and a Hertz type), and as the on-demand system, recording systems called a piezoelectric type, a shear mode piezoelectric type and a thermal ink jet type are known. As one of the on-demand system ink jet recording methods, a system that is called electrostatic accelerating ink jet or slit jet as described in Susumu Ichinose and Yuji Oba, Denshi Tsushin Gakkai Ronbunshi (Journal of Theses of Institute of Electronics and Communication Engineers of Japan), Vol. J66-C, No. 1, p. 47 (1983), and Tadayoshi Ono and Mamoru Mizuguchi, Gazo Denshi Gakkaishi (Bulletin of Institute of Images and Electronics), Vol. 10, No. 3, p. 157 (1981) is known. In this system, voltage is applied to a plurality of recording electrodes arranged at the positions facing to a recording medium and the counter electrodes arranged at the back of the recording medium, and electrostatic force functions to the ink fed on the recording electrodes by the potential difference generated between both electrodes to thereby the ink is jetted on the recording medium. The specific modes of this system are disclosed in JP-A-56-170, JP-A-56-4467 and JP-A-57-151374 (the term "JP-A" as used herein means an "unexamined published Japanese patent application".). Instead of the nozzles in related ink heads, long and narrow slit-like ink ejection openings having many recording electrodes on the inwalls are used in this system, and by feeding ink to the slit-like ink chambers and selectively applying high voltage to these electrodes, the ink in the vicinity of the electrode is jetted on recording paper in close vicinity and facing to the slit to thereby perform recording.

Accordingly, there is little possibility of clogging by ink, the reduction of manufacturing costs can be expected due to a simple constitution of the head, and the slit jet system is also an effective method to realize the length capable of covering the range of the width direction of a recording medium, that is, so-called a long size line head.

One example of drop-on-demand type full color recording heads constituted of such an electrostatic accelerating ink jet system is disclosed, e.g., in JP-B-60-59569 (the term "JP-B" as used herein refers to an "examined Japanese patent publication") and Denki Tsushin Gakkai Ronbunshi (Journal of Theses of Institute of Electrical Communication Engineers of Japan), Vol. J68-C, 2, pp. 93 to 100 (1985).

In the electrostatic accelerating ink jet heads, oil based ink obtained by dissolving a dye in an organic solvent is preferably used. The constitutional materials of the ink are not disclosed in these literatures in detail but inks having physical values, e.g., a volume resistivity (electrical resistivity) of from 10⁷ to 10⁸ Ω·cm, a surface tension of 22 mN/m, and a viscosity of from 3.1 to 6.9 cP are used.

However, such oil based inks are low in surface tension as compared with aqueous inks generally used in other ink jet systems, so that the permeability to recording paper is very high, particularly when printing is performed on plain paper, the reduction of print density, bleeding and offset are liable to occur.

A coloring material concentrate ejecting type electrostatic system not using slit-like recording heads is disclosed in JP-A-9-193389 and JP-A-10-138493. In the system, a plurality of individual electrodes for making electrostatic force function to coloring materials in ink are composed of a control electrode substrate comprising insulating substrates having through holes and control electrodes formed corresponding to the through holes and a pointed ink guide arranged at almost central position of the through holes, ink is conveyed to the ink droplet jet position along the surface of the pointed ink guide by surface tension, and ink droplets are jetted to a recording medium by applying prescribed voltage to the control electrode to thereby perform recording.

In the coloring material concentrate ejecting type electrostatic ink jet recording system, coloring material particles are converged at an ink ejection opening by electrophoresis and ink droplets of the coloring material particles are jetted in a highly concentrated form. As the physical values of ink important for jetting are the particle size, electric conductivity, viscosity and surface tension of an ink composition are known. However, even when the above physical properties are controlled, a technique of capable of stably ejecting ink droplets of a highly concentrated coloring material at high speed and printing highly precise images is not established yet.

### Summary of the Invention

An object of the invention is to provide an ink stock solution for ink jet recording excellent in ejecting stability, particularly suitable for a coloring material concentrate ejecting type electrostatic ink jet recording method, another object is to provide a method for manufacturing the same, and a further object is to provide ink for ink jet recording.

As a result of eager investigation of the requisites for stably ejecting ink droplets, the present inventors have found that, in addition to the physical values of the working solution of ink for ejection, the flowing characteristic of the original ink stock solution for ink jet recording for making the ink is important. Specifically, it is important that the ink stock solution for ink jet recording shows Newtonian fluidity, and when it shows non-Newtonian fluidity, the ink stock solution results in inferior ejection stability.

The invention relates to the following means, by which the above objects of the invention can be solved.
(1) An ink stock solution for ink jet recording comprising:
   a dispersion medium;
   coloring material particles containing a resin; and
   a dispersant,
   wherein a flowing characteristic of the ink stock solution shows Newtonian fluidity.
(2) The ink stock solution for ink jet recording as described in (1) above,
   wherein the ink stock solution comprises the coloring material particles in a concentration of 35 weight%.
(3) A method for manufacturing an ink stock solution for ink jet recording as described in (1) or (2) above, the method comprising a process of dispersing coloring material particles containing a resin in a dispersion medium with a dispersant,
   wherein the coloring material particles containing a resin is subjected to a swelling or a softening treatment in at least one of during the dispersing process and after the dispersing process.
(4) The method for manufacturing the ink stock solution for ink jet recording as described in (3) above,
   wherein the softening treatment is a treatment of heating the coloring material particles containing a resin.
(5) The method for manufacturing the ink stock solution for ink jet recording as described in (3) above,
   wherein the swelling treatment is a treatment of swelling the coloring material particles containing a resin by adding a good solvent.
(6) An ink for ink jet recording obtained by diluting an ink stock solution for ink jet recording as described in

(1) or (2) above with a dispersion medium,
wherein a viscosity of the ink for ink jet recording at 20°C is within a range of from 0.5 to 5 mPa·s.

### Brief Description of the Drawing

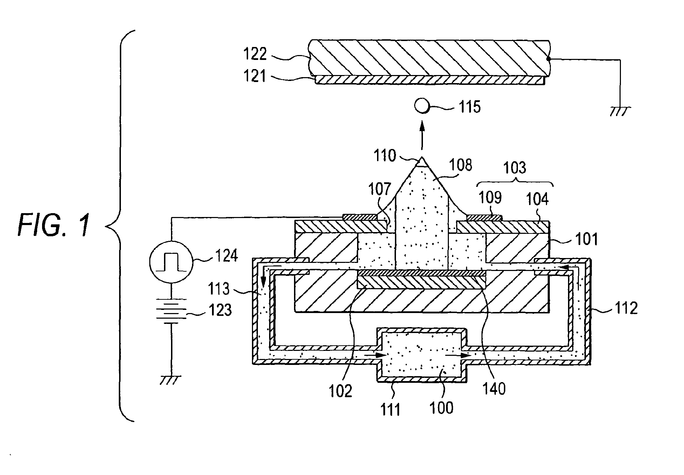

Fig. 1 is a drawing showing a constitutional example of a line scanning type multi-channel ink jet head, and shows the cross section of the ejecting electrode corresponding to recording dot.

### Detailed Description of the Invention

The invention is described in detail below.

The preferred viscosity of the working solution of ink for use in a coloring material concentrate ejecting type electrostatic ink jet recording system is from 0.5 to 5 mPa·s and almost all the inks show Newtonian fluidity. However, even inks showing low viscosity and Newtonian fluidity sometimes deteriorate in ejection stability. As a result of examining the cause, the present inventors came to the conclusion that the flowing characteristic of a highly concentrated original ink stock solution for making a working solution of ink is correlated with the ejection stability. Here, an ink stock solution means a solution of ink having concentration of coloring material particles of 35 weight%. Such a highly concentrated solution becomes highly viscous not like a working solution of ink, and related stock solutions of ink show non-Newtonian fluidity. In the case where an ink stock solution shows non-Newtonian fluidity, the ejecting stability deteriorates. That is, the particles of the working solution of ink migrate to the tip of a head by electric field, where non-Newtonian fluidity of the working solution of ink occurs when the coloring material particles are highly concentrated, so that the viscosity of the working solution of ink extremely increases and the movement of the particles to be ejected is hindered and the speed of response lowers, whereby ejecting stability is inhibited and clogging is liable to occur. Also in the circulatory system of ink, the viscosity of ink increases at blocking sites where the flow of ink is liable to stay so that the clogging by ink is sometimes caused. In contrast to this, these phenomena do not occur when ink shows Newtonian fluidity, and ejecting stability is remarkably improved.

In the invention, whether an ink stock solution shows Newtonian fluidity or not is decided by the following method.

As the viscometer, an ELD viscometer (for example, those manufactured by Tokyo Keiki Co) suitable for low viscosity of from 0.5 to 1, 000 mPa·s is used. In the case where an ink stock solution shows Newtonian fluidity, the relationship of η = S/Dₛ exists among the viscosity of an ink stock solution η, shearing rate Dₛ and shearing stress S. Specifically, when the viscosity is measured by changing the engine speed of a rotor, i.e., shearing rate Dₛ, the case where the value of viscosity is constant without depending upon shearing rate Dₛ is Newtonian fluid. The case where this relationship does not exist is non-Newtonian fluidity (e.g., pseudo-plasticity, thixotropy, etc.), and as shearing rate Dₛ becomes small, the viscosity increases. However, considering the accuracy of measuring apparatus themselves and dispersion in measurement, the definition of the flowing characteristic of an ink stock solution in the invention being Newtonian fluidity is that the fluctuation of the average viscosity value is within ±10% in the shearing rate Dₛ of the range of from 77 (sec⁻¹) to 383 (sec⁻¹). Further, it is preferred to perform measurement at at least two points of shearing rate Dₛ of 77 (sec⁻¹) and 383 (sec-¹). The average viscosity value is preferably 50 mPa·s or less, more preferably 30 mPa·s or less.

In the invention, as a means of bringing the flowing characteristic of an ink stock solution into Newtonian fluidity, a method of subjecting coloring material particles containing a resin to swelling or softening treatment during and/or after a process of dispersing the coloring material particles in a dispersion medium with a dispersant is exemplified. Why an ink stock solution comes to show Newtonian fluidity by the treatment is not known still yet, but the reason is presumably due to the fact that a resin in coloring material particles swells or softens and a part of the pigment partially bared on the surface of coloring material particles is completely covered with the resin, so that the function of strong cohesive strength by the pigment is weakened.

As the swelling treatment, the addition of good solvents of the resin component contained in coloring material particles is effective. The good solvents are solvents capable of dissolving the resin component and also compatible with the dispersion medium, and they can be arbitrarily selected according to the kinds of the resins and dispersion medium.

Describing in terms of a solubility parameter (an SP value) of a solvent, solvents in the range of about 9±1 are preferred, specifically toluene (8.9) from among hydrocarbon solvents, chloroform (9.3) and carbon tetrachloride (8.6) from among halogenohydrocarbon solvents, tetrahydrofuran (9.1) from among ether solvents, acetone (9.9) and methyl ethyl ketone (9.3) from among ketone solvents, and ethyl acetate (9.1) from among ester solvents are preferred.

The addition amount of a good solvent is preferably from 0.1 to 20 weight% based on the ink stock solution to be added to, more preferably from 0.5 to 5 weight%.

As the softening treatment, heating a dispersion medium at a temperature capable of softening the resin component in coloring material particles is effective. Specifically, heating at a temperature in the range of from the softening point of the resin to the softening point + 50°C is preferred, more preferably a temperature of from the softening point to the softening point + 30°C.

The dispersion medium, coloring material particles, dispersants and other additives for use in the invention are described below.

The dispersion medium for use in an ink stock solution for ink jet recording are non-polar and insulating solvents, preferably those having a dielectric constant of from 1.5 to 20 and surface tension of from 15 to 60 mN/m (at 25°C). Further desired characteristics are low toxic, low flammable, and low odorous.

As such dispersion medium, solvents selected from straight chain or branched aliphatic hydrocarbon, alicyclic hydrocarbon, aromatic hydrocarbon, petroleum naphtha, and halogen substitution products of these compounds are exemplified. For example, hexane, octane, isooctane, decane, isodecane, decalin, nonane, dodecane, isododecane, Isopar-E Isopar-G, Isopar-H and Isopar-L (manufactured by Exxon), Soltol (manufactured by Phillips Petroleum Company), IP Solvent (manufactured by Idemitsu Petrochemical Co., Ltd.), and as petroleum naphtha, S.B.R. Shellsol 70 and Shellsol 71 (manufactured by Shell Oil Co.), and Begasol (manufactured by Mobil Oil Co.) can be used alone or as a mixture.

As preferred hydrocarbon solvents, high purity isoparaffin hydrocarbons having a boiling point of from 150 to 350°C are exemplified, and as commercially available products, Isopar-G, H, L, M and V (trade names), Nopar 12, 13 and 15 (trade names, manufactured by Exxon), IP Solvent 1620 and 2028 (trade names, manufactured by Idemitsu Petrochemical Co., Ltd.), Isosol 300 and 400 (trade names, manufactured by Nippon Petrochemicals Company, Limited), Amsco OMS and Amsco 460 solvents (trade names, manufactured by Amsco Spirits Co.) are exemplified. These products are extremely high purity aliphatic saturated hydrocarbons, and their viscosity at 25°C is 3 cSt or less, the surface tension at 25°C is from 22.5 to 28.0 mN/m, and the specific resistance at 25°C is 10¹⁰ Ω·cm or more. These products are characterized in that the reactivity is low and stable, the toxicity is low and high in safety, and odor is less.

As the halogen-substituted hydrocarbon solvents, fluorocarbon solvents are exemplified, e.g., perfluoroalkanes represented by CₙF₂ₙ₊₂ such as C₇F₁₆ and C₈F₁₈ (Fluorinert PF5080 and Fluorinert PF5070, trade names, manufactured by Sumitomo 3M Limited, etc.), fluorine-based inert fluid (Fluorinert FC series (trade name), manufactured by Sumitomo 3M Limited, etc.), fluorocarbons (Clitox GPL series, a trade name, manufactured by Du Pont Japan Limited, etc.), chlorofluorocarbons (HCFC-141b, a trade name, manufactured by Daikin Industries Ltd.), and iodinated fluorocarbons such as F(CF₂)₄CH₂CH₂I, F(CF₂)₆I, etc. (I-1420, I-1600, trade names, manufactured by Daikin Fine Chemical Laboratory, etc.) are exemplified.

As the dispersion medium used in the invention, higher fatty acid esters and silicone oils can further be used. As the specific examples of silicone oils, low viscosity synthetic dimethylpolysiloxanes are exemplified, and KF96L (a trade name, manufactured by Shin-Etsu Chemical Co., Ltd.), and SH200 (a trade name, manufactured by Dow Corning Toray Silicone Co., Ltd.) are commercially available.

Silicone oils are not limited to these compounds. These dimethylpolysiloxanes having a wide range of viscosity are available by the molecular weights, but those having a viscosity of from 1 to 20 cSt are preferred. These dimethylpolysiloxanes have a volume resistivity of 10¹⁰ Ω·cm or more, and characteristics such as high stability, high safety and odorless similarly to the isoparaffin hydrocarbons. Furthermore, these dimethylpolysiloxanes are characterized in that they are low in surface tension, as low as from 18 to 21 mN/m.

As the solvents usable by mixture with these organic solvents, alcohols (e.g., methyl alcohol, ethyl alcohol, propyl alcohol, butyl alcohol, alcohol fluoride, etc.), ketones (e.g., acetone, methyl ethyl ketone, cyclohexanone, etc.), carboxylic esters (e.g., methyl acetate, ethyl acetate, propyl acetate, butyl acetate, methyl propionate, ethyl propionate, etc.), ethers (e.g., diethyl ether, dipropyl ether, tetrahydrofuran, dioxane, etc.), and halogenohydrocarbons (e.g., methylene dichloride, chloroform, carbon tetrachloride, dichloroethane, methyl chloroform, etc.) are exemplified.

Coloring material particles containing a resin is described in detail below.

The coloring materials are not particularly restricted and all the commercially available organic and inorganic pigments can be used.

For example, as pigments showing yellow color, monoazo pigments, e.g., C.I. Pigment Yellow 1 (Fast Yellow G, etc.), C.I. Pigment Yellow 74, disazo pigments, e.g., C.I. Pigment Yellow 12 (Disazo Yellow AAA, etc.), C.I. Pigment Yellow 17, non-benzidine azo pigments, e.g., C.I. Pigment Yellow 180, azo lake pigments, e.g., C.I. Pigment Yellow 100 (Tartrazine Yellow Lake, etc.), condensed azo pigments, e.g., C.I. Pigment Yellow 95 (Condensed Azo Yellow GR, etc.), acid dye lake pigments, e.g., C.I. Pigment Yellow 115 (Quinone Yellow Lake, etc.), basic dye lake pigments, e.g., C.I. Pigment Yellow 18 (Thioflavine Lake, etc.), anthraquinone pigments, e.g., Flavanthrone Yellow (Y-24), isoindolinone pigments, e.g., Isoindolinone Yellow 3RLT (Y-110), quinophthalone pigments, e.g., Quinophthalone Yellow (Y-138), isoindoline pigments, e.g., Isoindoline Yellow (Y-139), nitroso pigments, e.g., C.I. Pigment Yellow 153 (Nickel Nitroso Yellow, etc.), and metal complex azomethine pigments, e.g., C.I. Pigment Yellow 117 (Copper Azomethine Yellow, etc.) are exemplified.

As pigments showing magenta colors, monoazo pigments, e.g., C.I. Pigment Red 3 (ToluidineRed, etc.), disazo pigments, e.g., C.I. Pigment Red 38 (Pyrazolone Red B, etc.), azo lake pigments, e.g., C.I. Pigment Red 53:1 (Lake Red C, etc.), C.I. Pigment Red 57:1 (Brilliant Carmine 6B), condensed azo pigments, e.g., C.I. Pigment Red 144 (Condensed Azo Red BR, etc.), acid dye lake pigments, e.g., C.I. Pigment Red 174 (Phloxine B Lake, etc.), basic dye lake pigments, e.g., C.I. Pigment Red 81 (Rhodamine 6G' Lake, etc.), anthraquinone pigments, e.g., C.I. Pigment Red 177 (Dianthraquinonyl Red, etc.), thioindigo pigments, e.g., C.I. Pigment Red 88 (Thioindigo Bordeaux, etc.), perinone pigments, e.g., C.I. Pigment Red 194 (Perinone Red, etc.), perylene pigments, e.g., C.I. Pigment Red 149 (Perylene Scarlet, etc.), quinacridone pigments, e.g., C.I. Pigment Red 122 (Quinacridone Magenta, etc.), isoindolinone pigments, e.g., C.I. Pigment Red 180 (Isoindolinone Red 2BLT, etc.), and alizarine lake pigments, e. g. , C.I. Pigment Red 83 (Madder Lake, etc.) are exemplified.

As pigments showing cyan colors, disazo pigments, e.g., C.I. Pigment Blue 25 (Dianisidine Blue, etc.), phthalocyanine pigments, e.g., C.I. Pigment Blue 15 (Phthalocyanine Blue, etc.), acid dye lake pigments, e.g., C.I. Pigment Blue 24 (Peacock Blue Lake, etc.), basic dye lake pigments, e.g., C.I. Pigment Blue 1 (Bichrothia Pure Blue BO Lake, etc.), anthraquinone pigments, e.g., C.I. Pigment Blue 60 (Indanthrone Blue, etc.), and alkali blue pigments, e.g., C.I. Pigment Blue 18 (Alkali Blue V-5:1) are exemplified.

As pigments showing black colors, organic pigments such as aniline black pigments, e.g., BK-1 (Aniline Black), iron oxide pigments, and carbon black pigments, e.g., furnace black, lamp black, acetylene black and channel black are exemplified.

Further, metallic powders for reproducing gold, silver and copper colors can also be used.

The coloring materials used for an ink stock solution for ink jet recording are generally surface-treated and become coloring materials containing a resin.

As the surface treatment of the coloring materials, rosin treatment, polymer treatment, grafting treatment and plasma treatment described in Ganryo Bunsan Gijutsu (Dispersing Techniques of Pigments), Chap. 5, published by Gijutsu Joho Kyokai can be used.

"Rosin treatment" includes a method of mechanically blending a pigment and rosin to treat the surface of the pigment with the rosin, and a method of adding an aqueous solution of rosin to a water slurry of pigment, and then adding alkaline earth salts or acids thereto to thereby precipitate the hardly soluble salts or the free acids of the rosin on the pigment particle surface. In rosin treatment, rosin of from several percent to about 20% of the pigment is generally used. Rosin treatment has great effects, e.g., (1) a fine and highly transparent pigment can be obtained by the effect of preventing crystal growth of pigment, (2) mechanical dispersion is easy since the agglomeration by drying of particles is weakened, and (3) the wettability to an oily vehicle can be improved by increasing the lipophilicity of pigment surface, so that rosin treatment is frequently used particularly in the field of printing ink.

"Grafting treatment" is performing a grafting reaction of functional groups such as a hydroxyl group, a carboxyl group or an amino group present on the surface of inorganic fine particles, e.g., carbon black, silica and titanium oxide, and organic pigments, with a polymer. Grafting reactions of a polymer on the surface of a pigment include (1) a method of performing polymerization of a vinyl monomer by using a polymerization initiator in the presence of pigment fine particles, and stopping the growing polymer formed in the system by the functional groups on the surface of the pigment particles, (2) a method of growing graft chains from the polymerization initiating group introduced into the surface of pigment fine particles, and (3) a method by the polymer reaction of the functional groups on the surface of the pigment fine particles and the functional groups at terminals of a polymer.

"Plasma treatment" is to perform modification of the surface of pigment powder by low temperature plasma or heat plasma. The specific examples of the treatments of the surface of pigment by low temperature plasma include (1) modification by irradiation with plasma of nonpolymerizable gas such as oxygen and nitrogen, (2) modification by film formation by plasma polymerization with polymerizable gas, and (3) modification by a plasma initiating graft polymerization reaction comprising two stages of the first stage of forming active seeds on the surface of a base material by irradiation with plasma, and the second stage of bringing the surface of the pigment into contact with a monomer after irradiation and progressing graft polymerization in the post-reaction.

For the improvement of the dispersibility of pigments, the following polymer treatments are preferred.

As the typical polymer treatments, a chemical process using in-situ polymerization methods, a process using a coacervation method, and a process of treatment by mechanical force at the time of dispersing a pigment as described in Ganryo Bunsan Gijutsu (Dispersing Techniques of Pigments), on and after p. 99, published by Gijutsu Joho Kyokai are exemplified.

As the in-situ polymerization methods, a method of dispersing a pigment and a polymer, and then performing suspension polymerization, a method of dispersing a pigment in an aqueous system in the presence of a dispersant, and then performing polymerization by adding a polar polymer, a vinyl polymer, and a polyfunctional crosslinking polymer, and a method of block polymerizing a monomer having dispersed therein a pigment, and then performing suspension polymerization or emulsion polymerization to assist the sufficient adsorption of the polymers onto the pigment.

The coacervation method is a method to disperse a pigment in a polymer solution, and then precipitate the polymer on the pigment particles from the solution by lowering the solubility of the polymer by any method, and this method is characterized in that a broad range of polymers can be selected as compared with chemical processes (in-situ polymerization methods). A method of adding a nonsolvent to a resin solution containing a dispersed pigment to precipitate the resin on the surface of the pigment, and a method of finely dispersing a pigment in a water-soluble polymer solution and a water-soluble resin solution, and then adjusting the pH to precipitate the polymer and resin on the surface of the pigment are widely used including rosin treatment. Those obtained by dispersing a pigment in an acid solution of an acid-soluble nitrogen-containing acrylic resin, and then increasing the pH to thereby insolubilize the polymer on the pigment surface are effective in the agglomeration prevention in paints and printing inks, and the improvement of fluidity, glossiness and coloring property.

Describing a method of treating a polymer by mechanical force, a polymer and a pigment are mixed so that the content of the pigment is from 5 to 95% after mixing, kneading the mixture with a kneader or a three-roll mill with heating, and pulverizing the kneaded product with a pin mill or the like. A method called flushing resin treatment is also included in the mechanical polymer treating method.

The resins for use in the polymer treatment are not particularly restricted and any resins can be used so long as they have functions of capable of improving the dispersibility of resins in a dispersion medium.

As the preferred resins, resins having a part solvating with a solvent, a part hardly solvating with a solvent, and a part having a polar group are preferred so as to have the functions of adsorbing onto a coloring material and well dispersing in a dispersion medium. For example, as the monomers that solvate with a solvent after polymerization, lauryl methacrylate, stearyl methacrylate, 2-ethylhexyl methacrylate, and cetyl methacrylate are exemplified. As the monomers that hardly solvate with a solvent after polymerization, methyl methacrylate, ethyl methacrylate, isopropyl methacrylate, styrene and vinyl toluene are exemplified. As the monomers containing a polar group, acid monomers, e.g., acrylic acid, methacrylic acid, itaconic acid, fumaric acid, maleic acid, styrenesulfonic acid, and alkali metal salts of these acid monomers, and basic group monomers, e.g., dimethylaminoethyl methacrylate, diethylaminoethyl methacrylate, vinylpyridine, vinylpyrrolidone, vinylpiperidine, and vinyl lactam are exemplified.

The specific examples of the resins used in the polymer treatment include olefin polymers and copolymers (e.g., polyethylene, polypropylene, polyisobutylene, ethylene-vinyl acetate copolymer, ethylene-acrylate copolymer, ethylene-methacrylate copolymer, ethylene-methacrylic acid copolymer, etc.), polymers and copolymers of styrene and styrene derivatives (e.g., butadiene-styrene copolymer, isoprene-styrene copolymer, styrene-methacrylate copolymer, styrene-acrylate copolymer, etc.), acrylic ester polymers and copolymers, methacrylic ester polymers and copolymers, itaconic diester polymers and copolymers, maleic anhydride copolymers, rosin resin, hydrogenated rosin resin, petroleum resin, hydrogenated petroleum resin, maleic acid resin, terpene resin, hydrogenated terpene resin, chroman-indene resin, cyclic rubber-methacrylic.ester copolymers, cyclic rubber-acrylic ester copolymers, etc.

The proportion of the coloring material and the resin for use in the polymer treatment is generally from 95/5 to 5/95 in the weight ratio of coloring material/resin, preferably from 80/20 to 10/90.

Further, as the surface-treated coloring materials, commercially available processed pigments can also be used. The specific examples of the commercially available processed pigments include Microlysis pigments manufactured by Ciba Specialty Chemicals Inc., and as the preferred processed pigment, Microlysis T pigment covered with a rosin ester resin is exemplified.

In the dispersing process in the invention, the coloring material containing a resin is dispersed in a dispersion medium in a state of fine particles.

It is preferred to use a dispersant in the dispersing process to disperse the surface-treated coloring material in a state of fine particles and to stabilize the dispersion in a dispersion medium.

As the dispersants usable in the invention, general dispersants for pigments applicable to the dispersion medium can be used. Dispersants for pigments compatible with the dispersion medium capable of stably and finely dispersing pigments can be used.

The specific examples of the dispersants include nonionic surfactants, e.g., sorbitan fatty acid esters (e.g., sorbitan monooleate, sorbitan monolaurate, sorbitan sesquioleate, sorbitan trioleate, etc.), polyoxyethylene sorbitan fatty acid esters (e.g., polyoxyethylene sorbitan monostearate, polyoxyethylene sorbitan monooleate, etc.), polyethylene glycol fatty acid esters (e.g., polyoxyethylene monostearate, polyethylene glycol diisostearate, etc.), polyoxyethylene alkylphenyl ethers (e.g., polyoxyethylene nonylphenyl ether, polyoxyethylene octylphenyl ether, etc.), and aliphatic diethanolamides, and as polymer dispersants, polymer compounds having a molecular weight of 1, 000 or higher are preferably used, e.g., styrene-maleic acid resin, styrene-acrylic resin, rosin, BYK-160, 162, 164, 182 (urethane polymer compounds, manufactured by Bic Chemie), EFKA-47, LP-4050 (urethane dispersants, manufactured by EFKA Co.), Solspers 24000 (polyester polymer compounds, manufactured by Zeneca Co.), and Solspers 17000 (aliphatic diethanolamide, manufactured by Zeneca Co.) are exemplified.

As polymer dispersants for pigments besides the above compounds, monomers such as lauryl methacrylate, stearyl methacrylate, 2-ethylhexyl methacrylate and cetyl methacrylate solvating with a solvent, monomers such as methyl methacrylate, ethyl methacrylate, isopropyl methacrylate, styrene and vinyl toluene not solvating with a solvent, random copolymers comprising a part having a polar group, and the graft copolymers disclosed in JP-A-3-188469 are exemplified. As the monomers having a polar group, acid monomers such as acrylic acid, methacrylic acid, itaconic acid, fumaric acid, maleic acid, styrenesulfonic acid, and alkali metal salts of these acid monomers, and basic group monomers, e. g., dimethylaminoethyl methacrylate, diethylaminoethyl methacrylate, vinylpyridine, vinylpyrrolidone, vinylpiperidine, and vinyl lactam are exemplified. In addition to these compounds, styrene-butadiene copolymers, and the block copolymers of styrene and long chain alkyl methacrylate as disclosed in JP-A-60-10263 are exemplified. As preferred dispersants for pigments, the graft copolymers disclosed in JP-A-3-188469 are exemplified.

The use amount of dispersants for pigments is preferably from 0.1 to 300 weight parts per 100 weight parts of the pigment. When the amount is in the above range, a sufficient dispersing effect of pigment can be obtained.

The foregoing are the dispersion medium, coloring materials and dispersants of fundamental constitutional materials in the invention. When an ink stock solution is made a working solution of ink, the ink stock solution is diluted with the above dispersion medium in desired concentration of coloring material particles. The viscosity of a working solution of ink at 20°C is preferably in the range of from 0.5 to 5 mPa·s.

If desired, various additives may be added to a working solution of ink. The additives are optionally selected according to ink jet systems, ink jet ejecting heads, ink feeding systems, and the materials and structures of ink circulatory systems. For example, the additives described in supervised by Takeshi Amari, Ink Jet Printer - Gijutsu to Zairyo (Ink Jet Printer - Techniques and Materials), Chap. 17, CMC Publishing Co., Ltd. (1998) can be used.

Specifically, the following compounds, e . g. , fatty acids (e.g., monocarboxylic acid having from 6 to 32 carbon atoms, polybasic acids, e.g., 2-ethylhexynoic acid, dodecenyl-succinic acid, butylsuccinic acid, 2-ethylcaproic acid, lauric acid, palmitic acid, elaidic acid, linolenic acid, ricinoleic acid, oleic acid, stearic acid, enanthic acid, naphthenic acid, ethylenediaminetetraacetic acid, abietic acid, dehydroabietic acid, hydrogenated rosin, etc.), metal salts of resin acid, alkylphthalic acid, alkyl- salicylic acid (as the metals of metallic ions, Na, K, Li, B, Al, Ti, Ca, Pb, Mn, Co, Zn, Mg, Ce, Ag, Zr, Cu, Fe, Ba, etc., are exemplified), surface activating compounds (e.g., as organic phosphoric acids or salts thereof, mono-, di- or trialkylphosphoric acids comprising an alkyl group having from 3 to 18 carbon atoms, as organic sulfonic acids or salts thereof, long chain aliphatic sulfonic acid, long chain alkylbenzene- sulfonic acid, dialkylsulfosuccinic acid, or metal salts thereof, as amphoteric surface activating compounds, phospholipids such as lecithin, cephalin, etc.), surfactants having an alkyl group containing a fluorine atom and/or a dialkylsiloxane bond, aliphatic alcohols (e.g., higher alcohols comprising a branched alkyl group having from 9 to 20 carbon atoms, benzyl alcohol, phenethyl alcohol, cyclohexyl alcohol, etc.), polyhydric alcohols [e.g., alkylene glycols having from 2 to 18 carbon atoms (e.g., ethylene glycol, 1,2-propylene glycol, 1,3-propylene glycol, 1,4-butanediol, neopentyl glycol, 1,6-hexanediol, dodecanediol, etc.)], alkylene ether glycol having from 4 to 1, 000 carbon atoms (e.g., diethylene glycol, triethylene glycol, dipropylene glycol, polyethylene glycol, polypropylene glycol, polytetra- methylene ether glycol, etc.), alicyclic diol having from 5 to 18 carbon atoms (e.g., 1,4-cyclohexane dimethanol, hydrogvenated bisphenol A, etc.), adducts of alkylene oxide having from 2 to 18 carbon atoms (e.g., ethylene oxide, propylene oxide, butylene oxide, α-olefin oxide, etc.) of bisphenols having from 12 to 23 carbon atoms (e.g., bisphenol A, bisphenol F, bisphenol S, etc.), polyols, e.g., glycerol, trimethylolethane, trimethylolpropane, pentaerythritol, sorbitol, etc., tri-valent to octa-valent or higher phenols (e.g., trisphenol PA, phenol novolak, cresol novolak, etc.), adduts of alkylene oxide having from 2 to 18 carbon atoms of the above tri-valent or higher polyphenols (the addition number is from 2 to 20), ether derivatives of the above polyhydric alcohols (e.g., polyglycol alkyl ethers, alkylaryl polyglycol ethers, etc.), fatty acid ester derivatives of polyhydric alcohols, ether oleate derivatives of polyhydric alcohols (e.g., ethylene glycol monoethyl acetate, diethylene glycol monobutyl acetate, propylene glycol monobutyl propiolate, sorbitan monomethyl dioxalate, etc.), alkylnaphthalene sulfonate, alkylaryl sulfonate are exemplified as such additives. However, the invention is not limited to these compounds. The use amount of each additive is preferably adjusted so that the surface tension of the working solution of ink at 25°C is from 15 to 60 mN/m and the viscosity is from 1.0 to 40 cP.

It is also preferred to add an electric charge adjustor for adjusting the polar groups of coloring material particles and the quantity of charge thereof. As preferred electric charge adjustors, a metal salt of an organic carboxylic acid, e.g., zirconium naphthenate, zirconium octenoate, etc., an ammonium salt of an organic carboxylic acid, e.g., tetramethylammonium stearate, a metal salt of an organic sulfonic acid, e.g., sodium dodecylbenzenesulfonate, magnesium dioctyl-sulfosuccinate, etc., an ammonium salt of an organic sulfonic acid, e.g., tetrabutylammonium toluenesulfonate, etc., a polymer having a carboxylic acid at the side chain, e.g., a polymer containing a carboxylic acid obtained by modifying a copolymer of styrene and maleic anhydride with amine, etc., a polymer having a carboxylate anion at the side chain, e.g., a copolymer of stearyl methacrylate and tetramethylammonium methacrylate, etc., a polymer having a nitrogen atom at the side chain, e.g., a copolymer of styrene and vinylpyridine, etc. , and a polymer having an ammonium group at the side chain, e.g., a copolymer of butylthio methacrylate and N-(2-methacryloyloxyethyl)-N,N,N-trimethylammonium citrate are exemplified. Particularly preferred electric charge adjustor is a copolymer of octadecene and semimaleic acid octadecylamide. The electric charge applied to particles may be positive charge or negative charge.

A manufacturing method of an ink stock solution for ink jet recording according to the invention is described in detail below. After forming a colored admixture by covering a coloring material with a resin, the colored admixture is dispersed in a dispersion medium in a state of fine particles to thereby manufacture an ink stock solution. First, a process of preparing a colored admixture by covering a coloring material with a resin is explained. A colored admixture is prepared by the following methods.
(1) A method of melt-kneading a coloring material and a resin with a kneader such as a roll mill, a banbury mixer or a kneader, at a temperature of lower than the softening point of the resin, and cooling and pulverizing the kneaded product to thereby obtain a colored admixture.
(2) A method of dissolving a resin in a solvent, adding a coloring matereial thereto, dispersing the mixture in a ball mill, an attritor or a sand grinder by wet dispersion, and evaporating the solvent to thereby obtain a colored admixture, alternatively the dispersion is poured into a nonsolvent of the resin and precipitated to thereby obtain a colored admixture, and then the colored admixture is dried.
(3) A method of kneading a water-containing paste (a wet cake) of a pigment with a resin or a resin solvent by a flushing method to substitute the water with the resin or the resin solvent, and then drying the water and the solvent under reduced pressure to thereby obtain a colored admixture.

In the next place, a dispersing process of wet dispersing the above dry-pulverized colored admixture in a dispersion medium with a dispersant is described. Dispersing apparatus used in the dispersing process are not particularly restricted and any of commercially available wet dispersing apparatus can be used. For example, a ball mill, a sand mill and an attritor can be used, and sealed type apparatus are generally used for preventing the evaporation of a solvent. A sand mill comes in two types of vertical and horizontal. For dispersion, a shaft attached with discs or pins is rotated at a peripheral speed of from 3 to 15 m/s. By disposing a couple of continuous sand mills in series and performing dispersion by changing the diameters of dispersing media according to the degree of dispersion, an ink stock solution can be prepared efficiently. Further, when a pigment having a large particle size is dispersed with a continuous sand mill, pre-dispersion is necessary, and in such a case, a disperser, a ball mill or a batch type sand mill is used as a pre-disperser.

As the specific examples of horizontal type sand mills, a Dyno-Mill, a Dyno-Mill ECM (manufactured by WAB, Switzerland), a pearl mill, a DCP (manufactured by Dreis, Germany), an agitator mill (manufactured by Netche, Germany), a super mill (manufactured by Sussmeyer, Belgium), a Co Ball Mill (manufactured by Fryma, Switzerland), and a spike mill (manufactured by Inoue Manufacturing Co., Ltd.) are exemplified.

As the dispersing media for a ball mill and a sand mill, various materials, e.g., zirconia, titania, alumina, glass, steel and silicon nitride, can be used. The materials of dispersing media are selected according to the viscosity of the dispersion and the degree of pre-dispersion from the viewpoint of the specific gravity and abrasion resistance of media.

The diameters of media are not particularly restricted and, for example, those having a diameter of from 0.1 to 10 mm or so can be used. In general, the greater the media, the broader is the particle size distribution, and the smaller the media, the smaller is the dispersed particle. The packing rate of media is not also particularly limited, but the packing rate is preferably from 50 to 90%. The packing rate of media and the dispersing performance is in close relationship, and it is known that higher packing rate results in higher dispersion efficiency. In the case of horizontal type mills, as compared with vertical type mills, since a locking phenomenon of media at starting does not occur at all, the packing rate is preferably from 80 to 85% of the vessel capacity.

The volume average diameter of the coloring material particles in the dispersion medium obtained by the above dispersing process is from 0.01 to 10 µm, more preferably from 0.2 to 5 µm.

An electrostatic ink jet recording system in which the ink for ink jet recording (working solution of ink) is preferably used is described below.

Fig. 1 is a drawing showing a constitutional example of a line scanning type multi-channel ink jet head, and shows the cross section of the ejecting electrode corresponding to recording dot. In Fig. 1, ink 100 is fed from ink circulatory system 111 including a pump through ink feeding channel 112 connecting with head block 101 between head substrate 102 and ejecting electrode substrate 103, and recovered through ink recovery system 113 similarly connecting with head block 101 to ink circulatory system 111. Ejecting electrode substrate 103 consists of insulating substrate 104 having through hole 107 and ejecting electrode 109 that is formed on the side of the recording medium near through hole 107. On the other hand, on head substrate 102, pointed ink guide 108 is arranged at almost central position of through holes 107. Pointed ink guide 108 is made of an insulating material, e.g., plastic resin or ceramics, and arranged with the same interval and same pitch so that the center is the same with through hole 107, and held on head substrate 102 by a prescribed manner. Each pointed ink guide 108 has a trapezoidal or triangular form formed by cutting the tip of a tabular plate having a uniform thickness and the tip of ink guide 108 is ink droplet jet position 110. A slit-like groove may be formed from the tip of each pointed ink guide 108, and ink feeding to ink droplet jet position 110 can be performed smoothly by the capillary phenomenon of the slit, so that recording wavelength can be improved. If necessary, the optional surface of the ink guide may have electric conductivity. In such a case, when the conductive part is made electrically a floating state, and an electric field can be formed effectually at ink jet position with less voltage application to the ejecting electrode. Each pointed ink guide 108 protrudes toward ink droplet jet position almost perpendicularly from each through hole by a prescribed distance. Recording medium 121, recording paper, is arranged at the position facing to the tip of pointed ink guide 108, and counter electrode 122, which also serves as a role of platen to guide recording medium 121, is arranged at the back of recording medium 121 on the side opposite to head substrate 102. Further, migration electrode 140 is formed at the lowermost part of the space formed by head substrate 102 and ejecting electrode substrate 103, and charged particles in the ink are moved by electrophoresis in the direction of ejecting position of the ink guide by applying prescribed voltage to migration electrode 140, so that the responsibility of ejection can be improved.

The specific constitutional example of ejecting electrode substrate 103 is described below. A plurality of ejecting electrodes are arrayed in rows of two in the main scanning direction, and through hole 107 is formed at the center of each ejecting electrode and each individual ejecting electrode 109 is formed on the periphery of through hole 107. Here, migration electrode 140 is made of polyimide having a thickness of from 25 to 200 µm or so, ejecting electrode 109 is made of copper foil having a thickness of from 10 to 100 µm or so, and the inside diameter of through hole 107 is from 150 to 250 µmϕ or so.

Recording operation of an electrostatic system ink jet recording apparatus is explained below. Here, the case where positively charged ink is used is taken as an example, but the invention is not limited thereto. In recording, ink 100 fed from ink circulatory system 111 through ink feeding channel 112 is fed from through hole 107 to ink droplet jet position 110 at the tip of pointed ink guide 108, and partly recovered through ink recovery system 113 to ink circulatory system 111. Here, voltage of, for example, +1.5 kV is always given to ejecting electrode 109 as bias voltage from bias electrode 123, and, for example, pulse voltage of +500 V is added to ejecting electrode 109 at the time of ON as the signal voltage in responding to image signal from signal voltage source 124. Also at this time, voltage of +1.8 kV is applied to migration electrode 140. On the other hand, the earth voltage of counter electrode 122 provided at the back of recording medium 121 is set at 0 V as shown in the figure. According to cases, the side of recording medium 121 may be charged, e.g., at -1.5 kV as bias voltage. In this case, an insulating layer is provided on the surface of counter electrode 122, and the recording medium is charged with a corona charger, a scorotron charger or a solid ion generator, and at the same time, ejecting electrode 109 is earthed, and, for example, pulse voltage of +500 V is added to ejecting electrode 109 at the time of ON as the signal voltage in responding to image signal from signal voltage source 124. Also at this time, voltage of +200 V is applied to migration electrode 140. Now, ejecting electrode 109 is a state of ON (a state of being applied with 500 V), and when total voltage 2 kV of bias DC 1.5 kV and added pulse voltage 500 V is applied, ink droplet 115 is ejected from ink droplet jet position 110 at the tip of pointed ink guide 108, the ink jet is attracted in the direction of counter electrode 122, and flies toward recording medium 121 to form an image.

For the purpose of accurately controlling flying of an ink droplet after ejection and improving the precision of landing on a recording medium, means of providing an intermediate electrode between an ejecting electrode and a recording medium, or providing a guard electrode for the prevention of electric field interference between ejecting electrodes are frequently taken, and these means are of course preferably applicable to the invention according to necessity. In addition, s porous body may be provided between head substrate 102 and ejecting electrode substrate 103. In this case, the influence of the fluctuation of the internal pressure of ink due to the movement of an ink jet head can be prevented, and at the same time, feeding of an ink solution to through hole 107 area after ejection of ink droplets can be rapidly achieved. Accordingly, flying of ink droplet 115 is stabilized and a good image stable in density can be formed at high speed on recording medium 121.

### EXAMPLE

The invention will be described more specifically with referring to examples and comparative examples, but the invention is not limited thereto.

### COMPARATIVE EXAMPLE 1

As a blue pigment, 20 weight parts of Linol Blue FG-7350 (Pigment Blue 15: 3, manufactured by Toyo Ink Mfg. Co., Ltd.), as a resin, and 40 weight parts of styrene/vinyl toluene/lauryl methacrylate/butyl acrylate/trimethylammonium ethyl methacrylate (anion, p-toluenesulfonic acid) copolymer (weight ratio: 25/27/2/27/28, weight average molecular weight: 11,000, softening point: 46°C) were pulverized and thoroughly mixed with a Torio blender (manufactured by Torio Science Co.), and the mixture was melt-kneaded by heating at 85°C for 120 minutes in a table kneader PBV-0.1 (manufactured by Irie Shokai Co.). The kneaded product of pigment and resin was coarsely pulverized with the torio blender, and further finely pulverized with SK-M10 model sample mill (manufactured by Kyoritsu Riko Co.).

Subsequently, 14.6 weight parts of a 20 weight% solution prepared by dissolving 35 weight parts of the kneaded product of pigment and resin, 50.4 weight parts of Isopar-G and the pigment dispersant (D-1) shown below in Isopar-G with heating, and 400 weight parts of glass beads having a diameter of about 3 mm were put in a mayonnaise bottle of 500 ml, and preliminarily dispersed for 30 minutes with a paint shaker (manufactured by Toyo Seiki Seisaku-Sho, Ltd.).

Subsequently, after removal of the glass beads, the dispersion was dispersed for 2 hours with glass beads having a diameter of from 0.5 to 0.71 mm with a Dyno-Mill KDL (vessel capacity: 0.3 liters, manufactured by Shinmaru Enterprises Corporation) at 2,000 rpm while maintaining the liquid temperature of the dispersion at 30°C in a thermostatic oven NESLABRTE 7 (manufactured by M&S Instruments Inc.). The glass beads were removed from the obtained dispersion, thereby an ink stock solution having the concentration of coloring material particles of 35 weight% was obtained. On measurement of the flowing characteristic of the ink stock solution with an ELD viscometer for low viscosity (manufactured by Tokyo Keiki Co), it was revealed that the viscosity value was 70 mPa·s at shearing rate of 77 (sec⁻¹), 40 mPa·s at shearing rate of 383 (sec⁻¹), and the average viscosity value was 55 mPa·s.

A working solution of ink for ejection was prepared by diluting the ink stock solution with Isopar-G to adjust the concentration of coloring material particles to 7 weight%, and adding 0.05 weight% of a copolymer of octadecene and semimaleic acid octadecylamide as an electric charge adjustor. On measurement of the volume average diameter with an automatic ultra-centrifugal particle size distribution measuring apparatus CAPA700 (manufactured by Horiba, Ltd.), it was revealed that the viscosity value was 1.5 mPa·s at a particle size of 0.75 µm (measured at 20°C). The surface tension was 23 mN/m (measured with an automatic surface tension meter, manufactured by Kyowa Interface Science Co., Ltd., at 20°C), and the specific conductance of the entire ink was 800 pS/cm (measured with an LCR meter, model AG-4311 manufactured by Ando Electric Co., Ltd.). In the measurement of the specific conductance, the above LCR meter and an electrode for liquid (an LP-05 type, manufactured by Kawaguchi Electric Works Co., Ltd.) were used, and measured on the conditions of applied voltage of 5 V and frequency of 1 kHz.

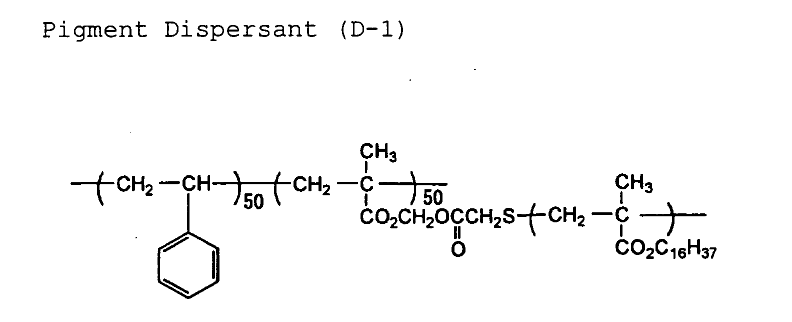

### Copolymerization ratio is by weight.

In the next place, after removing dust on the surface of coat recording paper of a recording medium by pump suction, imaging was performed with the working solution of ink and the electrostatic ink jet head of 100 dpi, 64 channels having the structure as shown in Fig. 1 as the ink jet recording apparatus, and the ejecting head was approached to the imaging position of the coat recording paper at imaging resolution of 600 dpi, but the ink could not be ejected at all.

### EXAMPLE 1

In Comparative Example 1, dispersing was continued for 2 hours with controlling the liquid temperature of the dispersion at 30°C, and then the temperature was raised to 50°C and dispersing was performed for further 30 minutes. The glass beads were removed from the obtained dispersion, thereby an ink stock solution having coloring material particle concentration of 35 weight% was obtained. On measurement of the flowing characteristic of the ink stock solution with an ELD viscometer for low viscosity (manufactured by Tokyo Keiki Co), it was revealed that the viscosity value was 5 mPa·s at shearing rate of 77 (sec⁻¹), 5 mPa·s at shearing rate of 383 (sec⁻¹), and the average viscosity value was 5 mPa·s.

A working solution of ink for ejection was prepared by diluting the ink stock solution with Isopar-G to adjust the concentration of coloring material particles to 7 weight%, and adding 0.13 weight% of a copolymer of octadecene and semimaleic acid octadecylamide as an electric charge adjustor so that the specific conductance of the entire ink became 800 pS/cm. On measurement of the volume average diameter with an automatic ultra-centrifugal particle size distribution measuring apparatus CAPA700 (manufactured by Horiba, Ltd.), it was revealed that the viscosity value was 1.3 mPa·s at a particle size of 0.90 µm (measured at 20°C). The surface tension was 23 mN/m (measured with an automatic surface tension meter, manufactured by Kyowa Interface Science Co., Ltd., at 20°C). When imaging was performed with the ink on the same conditions as in Comparative Example 1, dots free of bleeding due to following on the pulse voltage could be ejected, from which it was known that ejection stability was good.

### EXAMPLE 2

In Comparative Example 1, dispersing was continued for 2 hours with controlling the liquid temperature of the dispersion at 30°C. The glass beads were removed from the obtained dispersion, thereby an ink stock solution having coloring material particle concentration of 35 weight% was obtained. The obtained ink stock solution was put in an egg plant-shape flask and stirred for 30 minutes at a liquid temperature of 50°C. On measurement of the flowing characteristic of the ink stock solution having coloring material particle concentration of 35 weight% with an ELD viscometer for low viscosity (manufactured by Tokyo Keiki Co), it was revealed that the viscosity value was 25 mPa·s at shearing rate of 77 (sec⁻¹), 23 mPa·s at shearing rate of 383 (sec⁻¹), and the average viscosity value was 24 mPa·s.

A working solution of ink for ejection was prepared by diluting the ink stock solution with Isopar-G to adjust the concentration of coloring material particles to 7 weight%, and adding 0.09 weight% of a copolymer of octadecene and semimaleic acid octadecylamide as an electric charge adjustor so that the specific conductance of the entire ink became 800 pS/cm. On measurement of the volume average diameter with an automatic ultra-centrifugal particle size distribution measuring apparatus CAPA700 (manufactured by Horiba, Ltd.), it was revealed that the viscosity value was 1.5 mPa·s at a particle size of 0.90 µm (measured at 20°C). The surface tension was 23 mN/m (measured with an automatic surface tension meter, manufactured by Kyowa Interface Science Co., Ltd., at 20°C). When imaging was performed with the ink on the same conditions as in Comparative Example 1, dots free of bleeding due to following on the pulse voltage could be ejected, from which it was known that ejection stability was good.

### EXAMPLE 3

In Comparative Example 1, dispersing was continued for 2 hours with controlling the liquid temperature of the dispersion at 30°C. The glass beads were removed from the obtained dispersion, thereby a stock solution of dispersion having coloring material particle concentration of 35 weight% was obtained. To 100 weight parts of the stock solution of dispersion was added 2 weight parts of acetone and the stock solution was stirred for 30 minutes. After that, acetone was completely removed by vacuum deaeration with an evaporator. On measurement of the flowing characteristic of the ink stock solution with an ELD viscometer for low viscosity (manufactured by Tokyo Keiki Co), it was revealed that the viscosity value was 15 mPa·s at shearing rate of 77 (sec⁻¹), 13 mPa·s at shearing rate of 383 (sec⁻¹), and the average viscosity value was 14 mPa·s.

A working solution of ink for ejection was prepared by diluting the ink stock solution with Isopar-G to adjust the concentration of coloring material particles to 7 weight%, and adding 0. 08 weight% of a copolymer of octadecene and semimaleic acid octadecylamide as an electric charge adjustor so that the specific conductance of the entire ink became 800 pS/cm. On measurement of the volume average diameter with an automatic ultra-centrifugal particle size distribution measuring apparatus CAPA700 (manufactured by Horiba, Ltd.), it was revealed that the viscosity value was 1.3 mPa·s at a particle size of 0.85 µm (measured at 20°C). The surface tension was 23 mN/m (measured with an automatic surface tension meter, manufactured by Kyowa Interface Science Co., Ltd., at 20°C). When imaging was performed with the ink on the same conditions as in Comparative Example 1, dots free of bleeding due to following on the pulse voltage could be ejected, from which it was known that ejection stability was good.

The results obtained are summarized in Table 1 below.

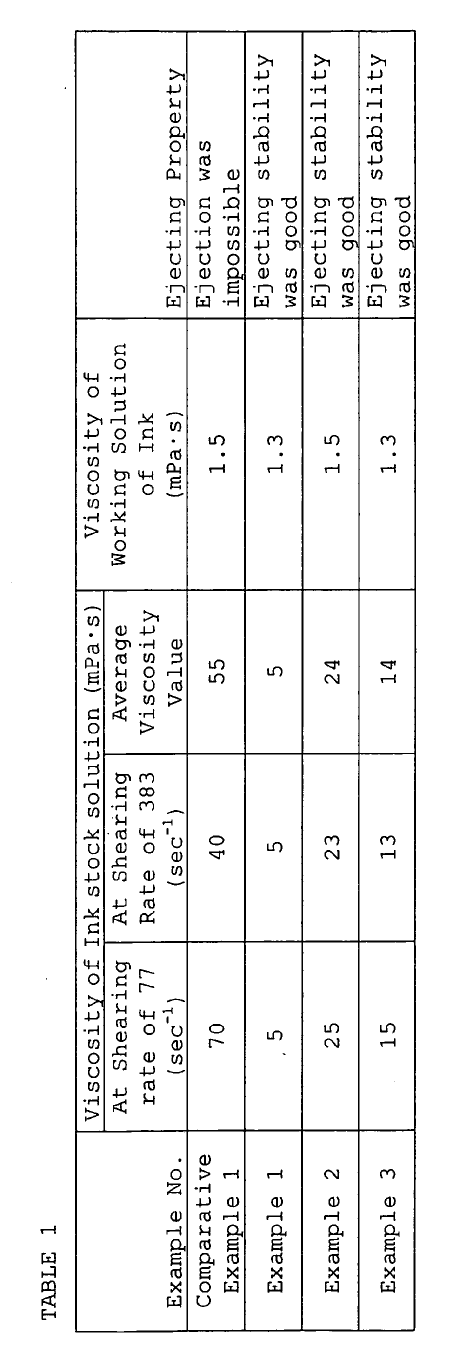

As is apparent from the results, ejection stability is very good when the flowing characteristic of the ink stock solution shows Newtonian fluidity, but when the ink stock solution shows non-Newtonian fluidity, ejection is impossible and ejection stability extremely deteriorates.

According to the invention, the ink stock solution for ink jet recording shows Newtonian fluidity, so that excellent ejecting stability can be given to ink. That is, the ink obtained from the ink stock solution for ink jet recording in the invention can be used for printing dots of high concentration and little in bleeding at high speed, can be ejected stably for a long period of time, and the ink is, in particular, suitable for a coloring material concentrate ejecting type electrostatic ink jet recording system.

The entire disclosure of each and every foreign patent application from which the benefit of foreign priority has been claimed in the present application is incorporated herein by reference, as if fully set forth.

## Claims

1. An ink stock solution for ink jet recording comprising:
a dispersion medium;
coloring material particles containing a resin; and
a dispersant,
wherein a flowing characteristic of the ink stock solution shows Newtonian fluidity.

2. The ink stock solution for ink jet recording according to claim 1,
wherein the ink stock solution comprises the coloring material particles in a concentration of 35 weight%.

3. A method for manufacturing an ink stock solution for ink jet recording according to claim 1, the method comprising a process of dispersing coloring material particles containing a resin in a dispersion medium with a dispersant,
wherein the coloring material particles containing a resin is subjected to a swelling or a softening treatment in at least one of during the dispersing process and after the dispersing process.

4. The method for manufacturing the ink stock solution for ink jet recording according to claim 3,
wherein the softening treatment is a treatment of heating the coloring material particles containing a resin.

5. The method for manufacturing the ink stock solution for ink jet recording according to claim 3,
wherein the swelling treatment is a treatment of swelling the coloring material particles containing a resin by adding a good solvent.

6. An ink for ink jet recording obtained by diluting an ink stock solution for ink jet recording according to claim 1 with a dispersion medium,
wherein a viscosity of the ink for ink jet recording at 20°C is within a range of from 0.5 to 5 mPa·s.
